Europäisches Patentamt

European Patent Office

Office européen des brevets

(19)

(11) Veröffentlichungsnummer : **0 014 903**
**B1**

# (12) EUROPÄISCHE PATENTSCHRIFT

(45) Veröffentlichungstag der Patentschrift :
11.05.83

(21) Anmeldenummer : 80100619.8

(22) Anmeldetag : 07.02.80

(51) Int. Cl.³ : **H 01 F 1/11, C 01 G 49/06,
G 11 B 5/68**

(54) **Verfahren zur Herstellung von nadelförmigem kobalthaltigem magnetischem Eisenoxid.**

(30) Priorität : 13.02.79 DE 2905351

(43) Veröffentlichungstag der Anmeldung :
03.09.80 Patentblatt 80/18

(45) Bekanntmachung des Hinweises auf die Patenterteilung : 11.05.83 Patentblatt 83/19

(84) Benannte Vertragsstaaten :
DE FR GB IT

(56) Entgegenhaltungen :
FR A 2 380 225
FR A 2 387 912
FR A 2 397 049
US A 4 112 184
JOURNAL OF APPLIED PHYSICS, Band 50, Nr. 1, Januar 1979, M. KISHIMOTO et al. : « Coercivity of gamma-Fe₂O₃ particles growing iron-cobalt ferrite », Seiten 450-452

(73) Patentinhaber : BASF Aktiengesellschaft
Carl-Bosch-Strasse 38
D-6700 Ludwigshafen (DE)

(72) Erfinder : Rudolf, Peter, Dr.
Wiesenstrasse 11
D-6701 Neuhofen (DE)
Erfinder : Steck, Werner, Dr.
Lorscher Strasse 3
D-6704 Mutterstadt (DE)
Erfinder : Jakusch, Helmut, Dr.
Lorscher Ring 6C
D-6710 Frankenthal (DE)
Erfinder : Vaeth, Guenter
Woogstrasse 35
D-6703 Limburgerhof (DE)
Erfinder : Jaeckh, Christof, Dr.
Max-Reger-Strasse 31
D-6900 Heidelberg (DE)

## Verfahren zur Herstellung von nadelförmigem kobalthaltigem magnetischem Eisenoxid

Die Erfindung betrifft ein Verfahren zur Herstellung von nadelförmigem, magnetischem Eisenoxid, bestehend aus einem Kern aus Gamma-Eisen(III)oxid und einer, bezogen auf die Gesamtmenge an magnetischem Material, 0,2 bis 12 Gewichtsprozent Kobalt(II)- und 0,1 bis 15 Gewichtsprozent Eisen(II)-Ionen enthaltenden Ferrit-Hülle.

Nadelförmiges Gamma-Eisen(III)oxid wird in großem Umfang als magnetisierbares Material bei der Herstellung von magnetischen Aufzeichnungsträgern seit langem eingesetzt. Durch die Fortentwicklung auf dem Gebiet der Aufzeichnungstechnik wurde jedoch zunehmend nach magnetischen Materialien gesucht, die sich vor allem durch eine höhere Koerzitivkraft gegenüber dem Gamma-Eisen(III)oxid auszeichnen. Es war zwar bekannt, daß sich die Koerzitivkraft von Eisenoxiden durch die Dotierung mit Kobalt u. U. beträchtlich erhöhen läßt, doch zeigen solche Materialien eine Reihe von unerwünschten Eigenschaften. Hierzu gehören insbesondere die thermische und mechanische Instabilität von Remanenz und Koerzitivkraft. Materialien mit solchen Nachteilen sind jedoch für den Einsatz bei magnetischen Aufzeichnungsträgern ungeeignet.

Diese kobalthaltigen nadelförmigen Eisenoxide sind nach einer Reihe von Verfahren zugänglich. Nach den deutschen Patentschriften 11 12 725 und 12 26 997 ist die Kobaltdotierung durch eine gemeinsame Fällung von Eisen- und Kobalthydroxid bei der Goethitherstellung in einfacher Weise möglich, da die anschließende Umwandlung des kobalthaltigen Goethits in das entsprechende Gamma-Eisen(III)oxid auf übliche Weise geschieht. In ähnlicher Weise wird auch gemäß der DE-OS 21 00 390 vorgegangen.

Nach der DE-AS 20 36 612 kann eine Kobaltverbindung auch auf die Oberfläche eines Gamma-Eisen(III)oxids aufgefällt werden. Mittels einer anschließenden Temperaturbehandlung bei 380 bis 400 °C wird das Kobalt in das Eisenoxidgitter eingebaut. In anderer Weise wird bei dem in der DE-OS 22 43 231 offenbarten Verfahren vorgegangen. Hier wird das nadelförmige Eisenoxidhydrat vor der Reduktion zum Magnetit mit einem Schutzüberzug zur Vermeidung des Zusammensinterns der Nadeln versehen und dann nach dem Aufbringen der Kobaltverbindung auf den Magnetit oder das Gamma-Eisenoxid einer Temperbehandlung unterzogen. Einen weiteren Weg zu kobalthaltigen nadelförmigen Eisenoxiden beschreibt die DE-OS 20 22 013. Danach wird nadelförmiges FeOOH oder $Fe_2O_3$ mit einer eine Kobaltverbindung enthaltenden Flüssigkeit gemischt, der Schlamm getrocknet und die Masse dann nach bekannten Verfahren entweder in Gamma-Eisen(III)oxid umgewandelt oder, für den Fall, daß bereits Gamma-Eisen(III)oxid eingesetzt wurde, lediglich gesintert. Außerdem ist es bekannt (DE-AS 19 07 236), kobalthaltiges nadelförmiges · Gamma-Eisen(III)oxid dadurch herzustellen, daß Gamma-Eisen(III)oxid direkt oder eines im Rahmen dessen Herstellung erhaltenes Oxid in wäßrigem Medium suspendiert, eine Kobaltverbindung aufgefällt oder anschließend auf eine Temperatur erwärmt wird, die zur Zersetzung der Kobaltverbindung ausreicht. Auch die teilweise Reduktion der nach diesem Verfahren erhaltenen kobaltdotierten Gamma-Eisen(III)oxide wird zur Erhöhung der Koerzitivkraft vorgeschlagen.

Auch ist bereits versucht worden, die Koerzitivfeldstärke von Eisenoxiden dadurch zu erhöhen, daß die entsprechenden nadelförmigen Oxide mit einer Epitaxialschicht aus Kobaltferrit umhüllt wurden (GB-PS 1 441 183). In ähnlicher Weise wird auch bei dem Verfahren nach der DE-OS 28 11 473 vorgegangen. Hier wird durch ein gleichzeitiges Aufbringen von Kobalt- und Eisen-Ionen auf das Eisenoxid und vorsichtiger Oxidation die Kobaltferrit-Schicht hergestellt. Eine Kobalt(II)- und Eisen(II)-Ionen enthaltende ferritische Hülle wird nach dem Verfahren der FR-A-2 380 225 durch Zugabe von Basen in eine wäßrige Kobalt(II)- und Eisen(II)-Ionen enthaltende Suspension von Gamma-Eisen(III)oxid, Erhitzen der Suspension, Abfiltrieren und Auswaschen des Feststoffanteils der Suspension sowie durch anschließendes Trocknen und Tempern auf den Gamma-Eisen(III)oxid-Kern aufgebracht.

Die nach dem Stand der Technik hergestellten kobalthaltigen nadelförmigen Eisenoxide sind in ihren magnetischen Eigenschaften nicht voll befriedigend und meist thermisch und/oder mechanisch instabil. Eine wünschenswert hohe Koerzitivfeldstärke wird nur durch eine Variation des relativ hohen Anteils an Kobalt erreicht, welcher dann zu den bekannten Nachteilen führt. Auch die Verringerung der Kobaltmenge kombiniert mit einer Erhöhung der Behandlungstemperatur führt nicht zu Produkten, die bei der Verwendung für magnetische Aufzeichnungsträger, den erwarteten Anforderungen genügen.

Es bestand daher die Aufgabe, ein für die Verwendung als magnetisierbares Material in magnetischen Aufzeichnungsträgern geeignetes kobalthaltiges nadelförmiges magnetisches Eisenoxid in verfahrensmäßig einfacher Weise herzustellen, das sehr hohe Werte für die Koerzitivfeldstärke bei gleichzeitig geringer Temperaturabhängigkeit der magnetischen Eigenschaften sowie eine enge Schaltfeldstärkenverteilung aufweist.

Es wurde nun gefunden, daß sich nadelförmige magnetische Eisenoxide, bestehend aus einem Kern aus Gamma-Eisen(III)-oxid und einer diesen Kern umgebenden, bezogen auf die Menge an magnetischem Material, 0,2 bis 12 Gewichtsprozent Kobalt(II)- und 0,1 bis 15 Gewichtsprozent Eisen(II)-Ionen enthaltenden ferritischen Hülle durch Zugabe von Basen in eine wäßrige Kobalt(II)- und Eisen(II)-Ionen enthaltenden Suspension von Gamma-Eisen(III)-oxid, Erhitzen der Suspension, Abfiltrieren und Auswaschen des Feststoffanteils der Suspension sowie anschließendes Trocknen und Tempern mit den gewünschten Eigenschaften herstellen lassen, wenn dazu nadelförmiges Gamma-Eisen(III)-oxid in Wasser suspendiert, dieser Suspension bei einer Temperatur zwischen 5 und 45 °C eine Kobalt(II)-Ionen enthaltende wäßrige Lösung, sowie wäßrige Basen zur Einstellung eines pH-Wertes von mindestens 10 zugesetzt, dann unter weiterem Rühren in Inertgasatmosphäre eine Eisen(II)-Ionen enthaltende wäßrige Lösung eingebracht wird und nach dem unter Inertgasatmosphäre stattfindenden Ausfällen des hydroxidischen Kobalt(II)- und Eisen(II)-Niederschlags der gesamte Feststoffanteil abfiltriert, mit Wasser neutral gewaschen und während ein bis sieben Stunden auf eine Temperatur zwischen 100 und 200 °C erhitzt wird.

Diese nach dem erfindungsgemäßen Verfahren hergestellten nadelförmigen kobalthaltigen magnetischen Eisenoxide besitzen somit einen Kern aus dem eingesetzten Gamma-Eisen(III)oxid und eine diesen Kern umhüllenden äußeren Schicht aus vorwiegend Magnetit und darin eingelagerten Kobalt(II)-Ionen in Form von Kobaltferrit.

Als Ausgangsmaterialien für das erfindungsgemäße Verfahren eignen sich die nach bekannten Methoden hergestellten nadelförmigen magnetischen Gamma-Eisen(III)-oxide. Diese Eisenoxid-Teilchen weisen eine mittlere Länge von 0,2 bis 1,5 um und ein Verhältnis von Länge zu Dicke zwischen 6 : 1 bis 20 : 1 auf. Erhalten werden diese Teilchen durch Umwandlung von nadelförmigem Eisen(III)-oxidhydrat in reduzierender Atmosphäre zu Magnetit und anschließender Oxidation zum Gamma-Eisen(III)-oxid bei Temperaturen unterhalb 400 °C. Gegebenenfalls kann zur Verbesserung der mechanischen und magnetischen Eigenschaften vor wie auch nach der Reduktion eine Temperbehandlung vorgenommen werden. Auch die Behandlung der verschiedenen Eisenoxid-Vorstufen bei der Herstellung des Gamma-Eisen(III)-oxides mit anorganischen oder organischen Substanzen, z. B. zur Erhöhung der Formstabilität der Teilchen ist möglich und kann sich im besonderen Fall als vorteilhaft herausstellen. Die Herstellung eines geeigneten Gamma-Eisen(III)-oxids läßt sich auch dadurch erreichen, daß ein nadelförmiges unmagnetisches Eisenoxid oder Eisenoxidhydrat mit höheren Kohlenwasserstoffen, höheren Alkoholen oder Aminen, Fettsäuren und deren Salze überzogen und bei einer Temperatur von etwa 400 bis 650 °C in Gegenwart von Luft umgewandelt wird.

Die für das erfindungsgemäße Verfahren erforderlichen Eisen(II)- und Kobalt(II)-Verbindungen müssen so ausgewählt werden, daß sie in wäßriger alkalischer Lösung nicht oxidierend wirken und die entsprechenden Hydroxide bilden. Zweckmäßigerweise werden jeweils die Chloride und Sulfate eingesetzt.

Zur Durchführung des erfindungsgemäßen Verfahrens wird das Gamma-Eisen(III)-oxid in Wasser, vorzugsweise in 5 bis 10 Gewichtsteile Wasser durch intensives Rühren oder mittels anderer üblicher Geräte suspendiert.

In diese Suspension wird zuerst die Kobalt(II)-Ionen enthaltende Lösung eingebracht und durch eine anschließende Zugabe wäßriger Basen, insbesondere von Natriumhydroxid, der pH-Wert der Suspension auf mindestens 10, vorzugsweise auf mindestens 12 eingestellt. Nach etwa einstündigem Rühren schließt sich die Zugabe der wäßrigen Eisen(II)-Ionen enthaltenden Lösung an. Danach empfiehlt es sich, noch längere Zeit intensiv zu rühren. Als vorteilhaft und ausreichend haben sich vier bis sieben Stunden erwiesen. Der gesamte Reaktionsablauf, insbesondere jedoch vom Zeitpunkt des Eisen(II)-Ionen-Zusatzes an, wird unter Intertgasabdeckung vorgenommen. Die Reaktionstemperatur sollte 45 °C nicht übersteigen und vorzugsweise zwischen 5 und 45 °C betragen, wobei es sich als zweckmäßig erwiesen hat, bei Raumtemperatur zu arbeiten.

Nach dieser Ausfällung hydroxidischer Kobalt(II)- und Eisen(II)-haltiger Niederschläge in der Gamma-Eisen(III)-oxid-Suspension wird der gesamte Feststoffanteil abfiltriert und so lange mit Wasser gewaschen, bis das Waschwasser neutral reagiert. Der Filterkuchen wird dann ein bis sieben, vorzugsweise zwei bis vier Stunden auf Temperaturen zwischen 100 und 200 °C, z. B. in einer Drehbirne bzw. einem Drehrohr, erhitzt. Mit dieser Temperaturbehandlung wird das in der beschriebenen Reaktion entstandene Produkt sowohl getrocknet als auch getempert, wobei dies sowohl im Inertgas- als auch im Luftstrom geschehen kann. Auf diese Weise lassen sich die magnetischen Eigenschaften, insbesondere die Koerzitivfeldstärke des Endproduktes beeinflussen. Wird der Trocknungs- und Temperschritt im Inertgasstrom, üblicherweise im Stickstoffstrom, bei vorzugsweise Temperaturen zwischen 130 und 180 °C durchgeführt, so beträgt die Erhitzungsdauer zweckmäßigerweise zwei bis vier Stunden. Bei einer Behandlung des Filterkuchens in oxidierender Atmosphäre, d. h. im Luftstrom, sind Temperaturen von 110 bis 150 °C während ein bis drei Stunden angebracht. Jedoch läßt sich dieser Verfahrensschritt auch derart durchführen, daß der Filterkuchen zuerst im Luftstrom bei 100 bis 120 °C getrocknet und dann unter Inertgas ein bis drei Stunden auf 130 bis 180 °C erhitzt wird.

Die nach dem erfindungsgemäßen Verfahren modifizierten nadelförmigen kobalthaltigen Eisenoxide zeichnen sich durch eine Reihe von Verbesserungen gegenüber Produkten nach dem Stand der Technik aus. So zeigen die nach diesem Verfahren hergestellten magnetischen Materialien eine höhere Koerzitivfeldstärke und eine engere Verteilung der Schaltfeldstärken. Auf die beschriebene Weise gelingt es somit die vorteilhaften Eigenschaften des Gamma-Eisen(III)oxids mit denen des Magnetits und des Kobaltferrits zu kombinieren, ohne aber die Nachteile der letztgenannten, wie mangelnde Richtbarkeit, breite Schaltfeldstärkenverteilung, thermische Instabilität der magnetischen Eigenschaften sowie hohe Magnetostriktion in Kauf nehmen zu müssen.

So sollte zweckmäßigerweise die Temperaturabhängigkeit der Koerzitivfeldstärke und der Remanenz derartiger kobalthaltiger Produkte möglichst wenig schlechter sein, als die des reinen Gamma-Eisen(III)-oxids. Nur so wirken sich die verbesserten magnetischen Eigenschaften der kobalthaltigen magnetischen Materialien uneingeschränkt zur Verbesserung der Aufzeichnungs- und Wiedergabeeigenschaften von daraus hergestellten magnetischen Aufzeichnungsträgern aus.

Neben der Temperaturabhängigkeit der magnetischen Eigenschaften ist die Schaltfeldstärkenverteilung bei den einzelnen Teilchen solcher magnetischer Materialien ein wesentliches Kriterium bei der Auswahl für die Herstellung magnetischer Aufzeichnungsträger. Die Verteilung der Schaltfeldstärken der einzelnen Teilchen wird aus der Gleichfeldentmagnetisierungskurve bestimmt. Hier sind bei der Feldstärke $H_R$, der sogenannten Remanenzkoerzitivfeldstärke bezüglich des Volumens die Hälfte der Teilchen ummagnetisiert. Damit stellt sie eine für Aufzeichnungsvorgänge charakteristische Größe dar, welche insbesondere den Arbeitspunkt bei der magnetischen Aufzeichnung bestimmt. Je uneinheitlicher die Remanenzkoerzitivfeldstärke der jeweils einzelnen magnetischen Teilchen in der Aufzeichnungsschicht ist, desto breiter ist die Verteilung der magnetischen Felder, welche ein begrenztes Volumen der Aufzeichnungsschicht ummagnetisieren können. Dies wirkt sich besonders dann aus, wenn wegen hoher Aufzeichnungsdichten bzw. geringen Wellenlängen der Grenzbereich zwischen entgegengesetzt magnetisierten Bereichen möglichst schmal sein sollte. Für die Charakterisierung der Verteilung der Schaltfeldstärken der einzelnen Teilchen bestimmt man aus der Gleichfeldentmagnetisierungskurve einen Wert $h_5$ für die Gesamtbreite der Remanenzkurve und $h_{25}$ für die Steilheit der Remanenzkurve. Die Werte werden bestimmt nach

$$h_5 = H_{95} - H_5/H_R$$

und

$$h_{25} = H_{75} - H_{35}/H_R.$$

Der Zahlenindex beim Buchstaben H besagt, wieviel der Teilchen in Prozenten jeweils ummagnetisiert sind. Undotierte Gamma-Eisen(III)-oxide weisen für $h_5/h_{25}$ Werte um 1,66/0,57 auf.

Die erfindungsgemäß hergestellten kobalthaltigen Eisenoxide besitzen somit neben einer angehobenen Koerzitivfeldstärke auch bezüglich der Temperaturbeeinflussung und der Werte für $h_5/h_{25}$ vorteilhafte Eigenschaften, wodurch sie sich besonders zum Einsatz für magnetische Aufzeichnungsträger eignen. Die Herstellung dieser Speichermedien geschieht in an sich bekannter Weise. Hierzu werden die magnetischen Materialien in polymeren Bindemitteln dispergiert. Als Bindemittel eignen sich die für diesen Zweck bekannten Verbindungen, wie Homo- und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die Erfindung sei anhand nachfolgender Beispiele näher erläutert.

Die magnetischen Werte der Materialien wurden in einem Schwingmagnetometer bei einer Feldstärke von 160 kA/m gemessen, und zwar die Koerzitivfeldstärke $H_c$ in kA/m, umgerechnet auf eine Stopfdichte von $\rho = 1,2$ mg/mm³ ($H_{c\ (\rho=1,2)}$), die spezifische Remanenz $M_{r/\rho}$ in nTm³/g und die spezifische Sättigungsmagnetisierung $M_{m/\rho}$ in nTm³/g bzw. bei einem Meßfeld von 800 kA/m als $M_{s/\rho}$ in nTm³/g.

## Beispiel A1

3 kg nadelförmiges $\gamma$-$Fe_2O_3$ mit einer Koerzitivfeldstärke von 23,5 kA/m, einer mittleren Nadellänge von 0,49 μm und -breite von 45 nm werden in 30 l Wasser dispergiert und die Suspension mit verdünnter Natronlauge auf pH = 7 gestellt. Unter Stickstoffabdeckung werden 364 g $CoCl_2 \cdot 6\ H_2O$ in 600 ml Wasser gelöst, der Suspension zugefügt, die Suspension auf 35 °C erhitzt und eine Stunde heftig gerührt. Anschließend werden innerhalb zwei Minuten 1 695 ml 48 %ige Natronlauge zugefügt und unter weiterem Rühren die Suspension mit 232 g Fe(II) in Form einer $FeCl_2$-Lösung versetzt. Es wird unter Stickstoffabdeckung noch sechs Stunden weitergerührt und dann die Suspension abgesaugt, neutral gewaschen und der Filterkuchen auf 130 °C unter Stickstoff 2 Stunden erhitzt.

Die erhaltenen Magnetwerte, der titrimetrisch ermittelte Magnetitgehalt, die spezifische Oberfläche $S_{N_2}$ nach B.E.T. und der pH-Wert des Materials sind in Tabelle 1 angegeben.

Tabelle 1

| Beispiel | Co-Gehalt | $Fe_3O_4$-Gehalt | pH | $S_{N2}$ m²/g | $M_{m/\rho}$ | $M_{r/\rho}$ | $H_c$ ($\rho = 1,2$) |
|---|---|---|---|---|---|---|---|
| A 1 | 3 % | 13,9 | 7,2 | 16,4 | 79 | 42 | 38,6 |

## Beispiel B1

6 kg nadelförmiges $\gamma$-Fe$_2$O$_3$ mit einer Koerzitivfeldstärke von 24,0 kA/m, einer mittleren Nadellänge von 0,48 $\mu$m und einer -breite von 0,45 nm werden in 30 l Wasser dispergiert. Bei Raumtemperatur wird die Suspension mit 728 g CoCl$_2$ · 6 H$_2$O, gelöst in einem Liter Wasser, versetzt und unter Stickstoffabdeckung eine Stunde gerührt. Dazu werden innerhalb von 8 Minuten 3 390 ml 48 % Natronlauge gegeben. Anschließend werden 464 g Fe(II) in Form einer technischen FeCl$_2$-Lösung innerhalb einer Stunde zugetropft. Die Suspension wird unter Stickstoff-Abdeckung bei Raumtemperatur 6 Stunden gerührt, abfiltriert und mit Wasser neutralgewaschen.

Der Filterkuchen wird in drei Teile aufgeteilt. Der Teil B1/I wird unter Stickstoff zwei Stunden auf 150 °C erhitzt. Der Teil B1/II wird zuerst zweieinhalb Stunden im Luftstrom auf 110 °C und dann eine Stunde unter Stickstoff auf 150 °C erhitzt.

Der Teil B1/III wird im Luftstrom zwei Stunden auf 150 °C erhitzt. Die Meßergebnisse sind in Tabelle 2 wiedergegeben.

## Vergleichsbeispiel B2

6 kg nadelförmige $\gamma$-Fe$_2$O$_3$ mit einer Koerzitivfeldstärke von 24,0 kA/m, einer mittleren Nadellänge von 0,49 $\mu$m und -breite von 49 nm werden in 30 l Wasser dispergiert. Bei Raumtemperatur wird die Suspension mit 728 g CoCl$_2$ · 6 H$_2$O, gelöst in einem Liter Wasser, versetzt und eine Stunde unter Stickstoffabdeckung nachgerührt. Danach wird die Suspension auf 80 °C erhitzt und mit 3 390 ml 48 %ige Natronlauge versetzt. Hierzu werden 464 g Fe(II), als technische FeCl$_2$-Lösung, innerhalb einer Stunde zugetropft. Die Suspension wird noch 6 Stunden bei 80 °C gerührt und nach Abkühlung der Suspension wird abfiltriert und mit Wasser neutral gewaschen. Der Filterkuchen wird in drei Teile aufgeteilt und als Proben B2/I, B2/II und B2/III der gleichen Temperaturbehandlung unterzogen wie bei B1/I bis B1/III angegeben. Die Meßergebnisse sind in Tabelle 2 aufgeführt.

Tabelle 2

| Versuch | Temperatur-Behandlung | Co-Dotierung | Fe$_3$O$_4$ % | M$_{m/\rho}$ | M$_{r/\rho}$ | H$_c$ ($\rho$ = 1,2) |
|---|---|---|---|---|---|---|
| B 1/I | 150 °C/N$_2$ 2 h | 3 % | 15 | 81 | 44 | 44,7 |
| B 1/II | 110 °C/Luft 2 1/2 + 1 h 150 °C/N$_2$ | 3 % | 9,3 | 75 | 40 | 39,9 |
| B 1/III | 150 °C/Luft 2 h | 3 % | 7 | 82 | 43 | 36,2 |
| Vergl.-Versuch | | | | | | |
| B 2/I | 150 °C/N$_2$ 2 h | 3 % | 17,3 | 83 | 45 | 35,2 |
| B 2/II | 110 °C/Luft 2 1/2 h + 1 h 150 °C/N$_2$ | 3 % | 14,5 | 81 | 43 | 33,5 |
| B 2/III | 150 °C/Luft 2 h | 3 % | 8,5 | 75 | 39 | 31,2 |

## Versuch C1

500 g nadelförmiges $\gamma$-Fe$_2$O$_3$ mit einer Koerzitivfeldstärke von 23,8 kA/m, einer mittleren Nadellänge von 0,50 $\mu$m und -breite von 48 nm werden in 2,5 l Wasser dispergiert. 60 g CoCl$_2$ · 6 H$_2$O werden hinzugefügt und unter Stickstoff-Abdeckung wird bei Raumtemperatur eine Stunde intensiv gerührt. Danach werden 282 ml 48 %ige Natronlauge innerhalb von 10 Minuten zugegeben und anschließend eine 38 g Fe(II)-Ionen enthaltende Lösung in 35 Minuten zugetropft. Bei Raumtemperatur wird unter Stickstoff-Abdeckung noch 6 Stunden gerührt.

Die Suspension wird abfiltriert und mit Wasser neutral gewaschen. Sodann wird der Filterkuchen im Stickstoffstrom zwei Stunden auf 150 °C erhitzt. Die Meßergebnisse sind in Tabelle 3 angegeben.

## Vergleichsversuch C2

Der Versuch wird wie Versuch C1 ausgeführt. Es wird nur auf die Stickstoff-Abdeckung verzichtet und in einem offenen Gefäß an der Luft gearbeitet.

Tabelle 3

| Versuch | Temperatur-Behandlung | Co-Dotierung | Fe$_3$O$_4$ % | M$_{m/\rho}$ | M$_{r/\rho}$ | H$_c$ ($\rho = 1,2$) |
|---|---|---|---|---|---|---|
| C 1 | 150 °C/N$_2$ 2 h | 3 % | 22 | 83 | 44 | 39,4 |
| Vergl.-Versuch C 2 | 150 °C/N$_2$ 2 h | 3 % | 6 | 76 | 37 | 28,6 |

## Versuch D1

500 g $\gamma$-Fe$_2$O$_3$ mit einer Koerzitivfeldstärke von 24,0 kA/m, einer mittleren Nadellänge von 0,49 $\mu$m und einer -breite von 47 nm werden in 2,5 l Wasser dispergiert. Die Suspension wird mit 60 g CoCl$_2$ · 6 H$_2$O, gelöst in wenig Wasser, versetzt und 30 Minuten unter Stickstoff-Abdeckung bei Raumtemperatur gerührt. Dann werden zuerst 282 ml 48 %ige NaOH zugefügt, und unter intensivem Rühren 77,5 g Fe(II) als technische FeCl$_2$-Lösung in 50 Minuten zugetropft. Bei Raumtemperatur wird unter Stickstoff-Abdeckung noch 6 Stunden gerührt, die Suspension abgesaugt und mit Wasser neutral gewaschen. Der Filterkuchen wird in vier Teile zerlegt:
Der Teil D1/I wird im Stickstoffstrom zwei Stunden auf 130 °C, der Teil D1/II ebenfalls im Stickstoffstrom zwei Stunden auf 150 °C, der Teil D1/III 2 1/2 Stunden im Luftstrom auf 110 °C und anschließend noch eine Stunde unter Stickstoff auf 150 °C und der Teil D1/IV zwei Stunden im Luftstrom auf 130 °C erhitzt. Die Meßergebnisse sind in Tabelle 4 angegeben.

## Vergleichsversuch D2

250 g $\gamma$-Fe$_2$O$_3$ mit einer Koerzitivfeldstärke H$_c$ von 24,0 kA/m, einer mittleren Nadellänge von 0,46 $\mu$m und -breite von 46 nm werden in 1,25 l Wasser dispergiert. Der Suspension werden 30 g CoCl$_2$ · 6 H$_2$O, gelöst in wenig Wasser, zugefügt. Die gesamte Reaktion wird unter Stickstoffabdeckung bei Raumtemperatur durchgeführt. Dann werden 113 ml 48 %ige NaOH auf 1 l mit Wasser aufgefüllt und von dieser verdünnten NaOH werden 500 ml in die Suspension gegeben. In den restlichen 500 ml der verdünnten NaOH werden 1,2 Mol NaBH$_4$ gelöst und unter heftigem Rühren in die Suspension getropft. Es tritt lebhafte Gasentwicklung ein, die nach etwa 7 Stunden abgeklungen ist. Jetzt wird noch eine Stunde gerührt, die Suspension abgesaugt und mit Wasser neutral gewaschen. Der Filterkuchen wird halbiert und als Proben D2/I und D2/II entsprechend den Proben D1/I und D1/II behandelt. Die Meßergebnisse sind in Tabelle 4 angegeben.

Tabelle 4

| Versuch | Temperatur-Behandlung | Co-Dotierung | Fe$_3$O$_4$ % | M$_{m/\rho}$ | M$_{r/\rho}$ | H$_c$ ($\rho = 1,2$) |
|---|---|---|---|---|---|---|
| D 1/I | 130 °C/N$_2$ 2 h | 3 % | 35,0 m | 85 | 45 | 44,9 |
| D 1/II | 150 °C/N$_2$ 2 h | 3 % | 32,0 | 85 | 46 | 46,8 |
| D 1/III | 110 °C/Luft 2 1/2 h 150 °C/N$_2$ | 3 % | 22,0 | 83 | 43 | 43,4 |
| D 1/IV | 130 °C/Luft 2 h | 3 % | 15,0 | 85 | 45 | 37,1 |
| Vergl.-Versuch D 2/I | 130 °C/N$_2$ 2 h | 3 % | 33,3 | 88 | 43 | 30,8 |
| D 2/II | 150 °C/N$_2$ 2 h | 3 % | 31,0 | 86 | 44 | 34,0 |

## Beispiel E1

500 g $\gamma$-Fe$_2$O$_3$ mit einer Koerzitivfeldstärke H$_c$ von 23,5 kA/m, einer mittleren Nadellänge von 0,49 $\mu$m und -breite von 48 nm werden in 2,5 l Wasser dispergiert. Der Suspension werden 100 g CoCl$_2$ · 6 H$_2$O, gelöst in wenig H$_2$O, zugefügt und unter Stickstoff-Abdeckung bei Raumtemperatur eine Stunde intensiv gerührt. Dann werden 475 ml 48 %ige Natronlauge innerhalb von 10 Minuten zugegeben

6

0 014 903

und schließlich eine 70 g Eisen(II)Ionen enthaltende Lösung in 35 Minuten zugetropft. Bei Raumtemperatur wird unter Stickstoff-Abdeckung noch 6 Stunden gerührt, die Suspension abgesaugt und mit Wasser neutral gewaschen. Der Filterkuchen wird in drei Teile zerlegt und Teil E1/I im Stickstoffstrom zwei Stunden auf 130 °C, Teil E1/II im Stickstoffstrom sieben Stunden auf 150 °C und Teil E1/III im Luftstrom zwei Stunden auf 130 °C erhitzt. Die Meßergebnisse sind in Tabelle 5 enthalten.

## Beispiel E2

Es wird wie in Beispiel E1 verfahren mit der Ausnahme, daß der Suspension jetzt nur 40 g $CoCl_2 \cdot 6 H_2O$ zugesetzt werden. Die Meßergebnisse sind ebenfalls in Tabelle 5 enthalten.

### Tabelle 5

| Versuch | Temperatur-Behandlung | Co-Dotierung | $Fe_3O_4$ % | $M_{m/\rho}$ | $M_{r/\rho}$ | $H_c$ ($\rho = 1,2$) |
|---|---|---|---|---|---|---|
| E 1/I | 130 °C/$N_2$ 2 h | 5 % | 27,3 | 82 | 48 | 50,1 |
| E 1/II | 150 °C/$N_2$ 7 h | 5 % | 25,0 | 80 | 46 | 58,4 |
| E 1/III | 130 °C/Luft 2 h | 5 % | 13,5 | 82 | 49 | 47,3 |
| E 2/I | 130 °C/$N_2$ 2 h | 2 % | 27,6 | 86 | 45 | 36,8 |
| E 2/II | 150 °C/$N_2$ 7 h | 2 % | 27,5 | 83 | 46 | 44,3 |
| E 2/III | 130 °C/Luft 2 h | 2 % | 16,6 | 86 | 44 | 31,7 |

## Beispiel F

500 g eines nadelförmigen $\gamma$-$Fe_2O_3$ mit einer Koerzitivfeldstärke $H_c$ von 26,2 kA/m, einer mittleren Nadellänge von 0,55 $\mu$m und -breite von 39 nm werden in 2,5 l Wasser dispergiert. Die Dispersion wird mit 20 g $CoCl_2 \cdot 6 H_2O$, gelöst in wenig Wasser, versetzt und eine Stunde bei Raumtemperatur unter Stickstoff-Abdeckung gerührt. Dazu werden 282 ml 48 %ige Natronlauge gegeben und 35 g Fe(II) als technische $FeCl_2$-Lösung innerhalb von 30 Minuten in die Suspension eingetropft. Unter Stickstoff-Abdeckung und bei Raumtemperatur wird die Suspension noch 6 Stunden gerührt, der Feststoff abgesaugt und mit Wasser neutral gewaschen. Der Filterkuchen wird im Luftstrom zwei Stunden auf 130 °C erhitzt. Die Meßergebnisse sind in Tabelle 6 angegeben.

## Beispiel G

6 kg eines nadelförmigen $\gamma$-$Fe_2O_3$ mit einer Koerzitivfeldstärke $H_c$ von 27,3 kA/m, einer Nadellänge von 0,56 $\mu$m und -breite von 50 nm werden in 30 l Wasser dispergiert. Die Suspension wird mit 366 g $CoCl_2 \cdot 6 H_2O$, gelöst in 1 l Wasser, versetzt und eine Stunde intensiv gerührt. Die gesamte Reaktion vollzieht sich unter Stickstoff-Abdeckung bei Raumtemperatur. Dann werden der Suspension 3 390 ml 48 %ige Natronlauge innerhalb von 10 Minuten zugefügt und anschließend 462 g Fe(II)-Ionen als technische $FeCl_2$-Lösung zugetropft. Die Suspension wird noch 6 Stunden gerührt, abgesaugt und mit Wasser neutral gewaschen. Der Filterkuchen wird 2 Stunden im Luftstrom auf 150 °C erhitzt. Die Meßergebnisse sind in Tabelle 6 angegeben.

## Beispiel H

3,5 kg eines nadelförmigen $\gamma$-$Fe_2O_3$ mit einer Koerzitivfeldstärke von 26,2 kA/m, einer mittleren Nadellänge von 0,55 $\mu$m und einer -breite von 39 nm werden in 17,5 l Wasser dispergiert. Die gesamte nachfolgende Reaktion verläuft bei Raumtemperatur unter Inertgasatmosphäre. Der Suspension werden 706,5 g $CoCl_2 \cdot 6 H_2O$, gelöst in 1 l Wasser, zugefügt und 1 Stunde intensiv gerührt. Dann werden 2 000 ml 48 %ige Natronlauge rasch zugegeben und eine 490 g Fe(II)ionen enthaltende Lösung innerhalb einer Stunde zugetropft. Die Suspension wird noch 6 Stunden gerührt, abfiltriert und mit Wasser neutral gewaschen. Der Filterkuchen wird im Stickstoffstrom zwei Stunden auf 180 °C erhitzt. Die Meßergebnisse sind in Tabelle 6 angegeben.

7

Tabelle 6

| Versuch | Temperatur-Behandlung | Co-Dotierung | $Fe_3O_4$ % | $M_{m/\rho}$ | $M_{r/\rho}$ | $H_c$ ($\rho = 1,2$) |
|---|---|---|---|---|---|---|
| Beispiel F | 130 °C/Luft 2 h | 1,0 % | 29,5 | 82 | 40 | 33,0 |
| Beispiel G | 150 °C/Luft 2 h | 1,5 % | 4,5 | 82 | 43 | 32,6 |
| Beispiel H | 180 °C/$N_2$ 2 h | 5,0 % | 27,3 | 80 | 47 | 62,6 |

Beispiel I/1

900 Teile eines gemäß Beispiel B1/I hergestellten Materials werden in einer Stahlkugelmühle mit 225 Teilen einer 20 %igen Lösung eines Copolymerisats aus 80 % Vinylchlorid, 10 % Dimethylmaleinat und 10 % Diäthylmaleinat in einem Gemisch aus gleichen Teilen Tetrahydrofuran und Dioxan, 808 Teilen einer 13 %igen Lösung eines thermoplastischen Polyesterurethans aus Adipinsäure, 1,4-Butandiol und 4,4'-Diisocyanatodiphenylmethan in einem Gemisch aus gleichen Teilen Tetrahydrofuran und Dioxan, 54 Teilen Sojalecithin, 0,9 Teilen eines handelsüblichen Silikonöls, 1,8 Teilen Hydrochinon, 1,8 Teilen Butylstearat, 9 Teilen Isostearinsäure und 620 Teilen des genannten Lösungsmittelgemisches gemischt und dispergiert. Danach wird die Dispersion mit 1,5 % 4,4'-Diiosocyanatodiphenylmethan versetzt, filtriert und in bekannter Weise auf eine 6 μm dicke Polyäthylenterephthalatfolie in einer solchen Stärke aufgetragen, daß nach dem Ausrichten der nadelförmigen Teilchen durch Vorbeiführen an einem Magnetfeld und anschließendem Trocknen eine Magnetschicht in der in Tabelle 7 angegebenen Schichtstärke d [μm] verbleibt.

Die magnetischen Eigenschaften, wie die Koerzitivfeldstärke $H_c$ [kA/m], Remanenz $M_r$ [mT], Sättigung [mT], relative Remanenz und $h_{25}$-Wert werden in einem Meßfeld von 800 kA/m bestimmt und sind in Tabelle 7 aufgeführt, ebenso die an einem aus der beschichteten Folie geschnittenen Magnetband in Anlehnung an DIN 45 512 gegen die jeweiligen Bezugsbänder bei einer Aufzeichnung von 10 kHz, gemessenen elektroakustischen Eigenschaften, wie Höhenausteuerbarkeit $A_H$, dem maximalen Bandfluß und Höhenempfindlichkeit $E_H$.

Beispiel I/2

Es wird wie bei Beispiel I/1 verfahren, jedoch wird als magnetisches Material ein solches gemäß Beispiel F eingesetzt. Die Meßergebnisse sind in Tabelle 7 aufgeführt.

Beispiel I/3

Es wird wie bei Beispiel I/1 verfahren, jedoch wird als magnetisches Material ein solches gemäß Beispiel G eingesetzt. Die Meßergebnisse sind in Tabelle 7 aufgeführt.

Beispiel I/4

Es wird wie bei Beispiel I/1 verfahren, jedoch wird als magnetisches Material ein solches gemäß Beispiel H eingesetzt. Die Meßergebnisse sind in Tabelle 7 aufgeführt.

Beispiel I/5

Es wird wie bei Beispiel I/1 verfahren, jedoch wird als magnetisches Material das bei Beispiel A1 eingesetzte Ausgangsmaterial verwendet. Die Meßergebnisse sind in Tabelle 7 aufgeführt.

Tabelle 7

| Beispiel | $H_c$ | $M_r$ | $M_s$ | $M_r/M_s$ | $h_{25}$ | d | Bezugsband nach DIN | $A_H$ | $E_H$ |
|---|---|---|---|---|---|---|---|---|---|
| I/1 | 50,9 | 153 | 302 | 0,76 | 0,29 | 4,8 | C 401 R | + 2,9 | + 2,0 |
| I/2 | 33,9 | 156 | 190 | 0,82 | 0,32 | 4,8 | T 308 S | + 2,6 | + 2,0 |
| I/3 | 32,5 | 137 | 165 | 0,83 | 0,31 | 5,0 | T 308 S | + 3,2 | + 2,6 |
| I/4 | 68,7 | 147 | 182 | 0,81 | 0,31 | 4,8 | C 401 R | + 6,0 | + 4,0 |
| I/5 | 21,7 | 166 | 198 | 0,84 | 0,29 | 4,3 | T 308 S | − 1,1 | + 0,3 |

**Ansprüche**

Verfahren zur Herstellung von nadelförmigen magnetischen Eisenoxiden, bestehend aus einem Kern aus Gamma-Eisen(III)-oxid und einer diesen Kern umgebenden, bezogen auf die Menge an magnetischem Material, 0,2 bis 12 Gewichtsprozent Kobalt(II)- und 0,1 bis 15 Gewichtsprozent Eisen(II)-Ionen enthaltenden ferritischen Hülle durch Zugabe von Basen in eine wäßrige Kobalt(II)- und Eisen(II)-Ionen enthaltenden Suspension von Gamma-Eisen(III)-oxid, Erhitzen der Suspension, Abfiltrieren und Auswaschen des Feststoffanteils der Suspension sowie anschließendes Trocknen und Tempern, dadurch gekennzeichnet, daß nadelförmiges Gamma-Eisen(III)-oxid in Wasser suspendiert, dieser Suspension bei einer Temperatur zwischen 5 und 45 °C eine Kobalt(II)-Ionen enthaltende wäßrige Lösung, sowie wäßrige Basen zur Einstellung eines pH-Wertes von mindestens 10 zugesetzt, dann unter weiterem Rühren in Inertgasatmosphäre eine Eisen(II)-Ionen enthaltende wäßrige Lösung eingebracht wird und nach dem unter Inertgasatmosphäre stattfindenden Ausfällen des hydroxidischen Kobalt(II)- und Eisen(II)-Niederschlags der gesamte Feststoffanteil abfiltriert, mit Wasser neutral gewaschen und während ein bis sieben Stunden auf eine Temperatur zwischen 100 und 200 °C erhitzt wird.

**Claims**

A process for the manufacture of acidular magnetic iron oxide consisting of a core of gamma-iron(III)-oxide surrounded by a ferrite shell which contains, based on the amount of magnetic material, from 0.2 to 12 per cent by weight of cobalt(II)ions and from 0.1 to 15 per cent by weight of iron(II)ions, by adding a base to an aqueous suspension, containing cobalt(II)ions and iron(II)ions, of gamma-iron(III)oxide, heating the suspension, filtering off and washing the solids content of the suspension, and subsequently drying and heating the solid product, wherein acicular gamma-iron(III)oxide is suspended in water, an aqueous solution containing cobalt(II)ions, and an aqueous base to bring the pH to not less than 10 are added to this suspension at from 5 to 45 °C, thereafter an aqueous solution containing iron(II)ions is introduced under an inert gas atmosphere, with continued stirring, and after the cobalt(II)hydroxide and iron(II)hydroxide has precipitated under the inert gas atmosphere, the entire solid product is filtered off, washed neutral with water and heated at from 100 to 200 °C for from one to seven hours.

**Revendications**

Procédé de préparation d'oxydes de fer magnétiques aciculaires, constitués d'un noyau d'oxyde de fer(III)-γ et d'une enveloppe ferritique, entourant ce noyau, et contenant, rapportés à la quantité de matériau magnétique, 0,2 à 12 % en poids d'ions cobalt(II) et 0,1 à 15 % en poids d'ions fer(II), par addition de bases dans une suspension aqueuse d'oxyde de fer(III)-γ, contenant des ions cobalt(II) et fer(II), chauffage de la suspension, séparation par filtration et lavage de la partie solide de la suspension, ainsi que séchage et recuit suivants, caractérisé par le fait que de l'oxyde de fer(III)-γ, aciculaire, est mis en suspension dans l'eau, à cette suspension est ajoutée, à une température comprise entre 5 et 45 °C, une solution aqueuse contenant des ions cobalt(II), ainsi que des bases aqueuses pour obtenir un pH d'au moins 10, puis, en continuant à brasser, sous atmosphère de gaz inerte, est introduite une solution aqueuse contenant des ions fer(II) et après la précipitation, s'opérant sous atmosphère de gaz inerte, du dépôt hydroxydique de cobalt(II) et fer(II), toute la partie solide est filtrée, lavée à neutralité avec de l'eau et, pendant une à sept heures, est chauffée à une température comprise entre 100 et 200 °C.